# EUROPEAN PATENT SPECIFICATION

(11) **EP 0 986 069 B1**
(45) Date of publication and mention of the grant of the patent: **16.06.2004**
(21) Application number: 99116933.5
(22) Date of filing: 27.08.1999
(51) Int. Cl.: G21C 3/00, G21C 7/10

(54) **A device and a method for preventing shadow corrosion**
Anordnung und Verfahren zum Schutz gegen Schattenkorrosion
Dispositif et procédé de protection contre la corrosion par effet d'ombre

(30) Priority: 11.09.1998 SE 9803080
(43) Date of publication of application: 15.03.2000
(73) Proprietor: Westinghouse Atom AB, 721 63 Västeras (SE)
(72) Inventor: Wikmark, Gunnar, 752 34 Uppsala (SE)
(74) Representative: Berglund, Stefan

(56) References cited:
- EP-A- 0 624 659
- EP-A- 0 798 747
- DE-U- 29 809 001
- US-A- 5 848 113
- PATENT ABSTRACTS OF JAPAN vol. 1997, no. 03, 31 March 1997 (1997-03-31) & JP 08 313683 A (TOSHIBA CORP), 29 November 1996 (1996-11-29)
- PATENT ABSTRACTS OF JAPAN vol. 1996, no. 01, 31 January 1996 (1996-01-31) & JP 07 248390 A (NIPPON NUCLEAR FUEL DEV CO LTD), 26 September 1995 (1995-09-26)
- PATENT ABSTRACTS OF JAPAN vol. 1996, no. 01, 31 January 1996 (1996-01-31) & JP 07 244177 A (HITACHI LTD), 19 September 1995 (1995-09-19)

## Description

### THE BACKGROUND OF THE INVENTION AND PRIOR ART

The present relates to a device, comprising a first component, which comprises a zirconium-based alloy, and a second component of such a type that it can form a counter-electrode in relation to the first component, said first and second components being arranged at a short distance from each other, with an electrically conducting medium between them, and being subjected to radioactive radiation through a radiation field.

The invention also relates to a method for preventing shadow-corrosion on a first component, said component comprising a zirconium-based alloy and being intended to be arranged in a field of radioactive radiation at a short distance from a second component, said second component being of a type that can form a counter-electrode in relation to the first component, and said first and second components being subjected to the radiation of the field.

Today, devices of the above type are often used in nuclear power plants. In recent time, it has been noticed that zirconium-based alloys that are arranged at a short distance from a component made of, for example, stainless steel or a nickel-base alloy present an elevated tendency of corroding in the environment in which they are arranged inside a nuclear power plant in comparison to the case in which they are arranged at a larger distance from said component in the same environment. In this environment, the zirconium-based alloy is subjected to radiation as well as corrosive media.

Until now, there has been a general opinion that the reason for this corrosion, so-called shadow-corrosion, is an elevated radiolysis due to an extensively elevated β-field due to a nuclear reaction with the alloying element manganese.

Accordingly, prior art within this field is primarily focused on solving the problem of the shadow-corrosion by avoiding said nuclear reaction with the alloying element manganese in some way. However, this has not resulted in any commercially practical solutions, and therefore, the shadow-corrosion of zirconium-based alloys arranged at a short distance from components made of stainless steel or nickel based alloys has, so far, been accepted as unavoidable under the conditions given in nuclear power plants.

EP-A2-0 798747 describes a device according to the preamble of claim 1.

The English abstract of JP-A-08-313683 describes that galvanic corrosion in a Zircaloy channel box can be suppressed by coating the surface of a handle of a control rod and guide roller with an insulation ceramic, such as alumina or spinel.

The English abstract of JP-A-07-248390 describes that local corrosion of a contact part (upper end plug and lower end plug of a clad pipe) can be reduced by forming an oxide film on one side or both sides of a constitutive member of the contact part.

### SUMMARY OF THE INVENTION

One object of the present invention is to provide a device in which a first component that comprises a zirconium-based alloy arranged at a close distance from a second component made of a nickel based material presents a substantially reduced tendency to shadow-corrosion in relation to devices according to prior art.

This objective is achieved by means of a device according to claim 1.

The shadow-corrosion problem is thus attacked in a way substantially different from the ones proposed through prior and research. The solution is based upon the new insights about the reasons to the shadow-corrosion phenomena which the inventors have come to. Thereby, one has come to the conclusion that it is a combination of radiation (mainly γ-radiation) and a not very well passivated (from an electrochemical, not chemical point of view) component at a short distance from the zirconium material which gives rise to the shadow-corrosion. The γ-radiation results in occasional conducting channels for charges, which results in the corrosion being substantially increased locally, and also integrally over the whole oxide film which is present on the surface of the zirconium-based alloy in these environments. In order to avoid shadow-corrosion, the first component should thus be electrically insulated from the second component, at least in the region where the two components are arranged at a distance from each other which is below a certain shortest distance.

According to the invention, the device comprises an insulating coating disposed on the second component. Thereby, an advantageous shielding of the very reason for or source of the shadow-corrosion on the first component is obtained.

According to the invention, the coating comprises zirconium dioxide. With today's technique, this kind of coating can be deposited in a suitable way onto the component in question. It have qualities to cope with the corrosive environment which it will be subjected to in a nuclear power plant, while simultaneously being subjected to radiation, for example neutron radiation and γ-radiation. When the coating comprises a plurality of layers, as, for example, in connection with deposition by means of PVD or CVD, one or more of the layers may comprise a generally pure metallic material, e.g. from the group comprising Pt, Ni, Pd, Rh, Ti, Cu, and Zr.

According to a preferred embodiment, the coating has a thickness in the range of 0.01-1000 µm. The choice of thickness depends on a plurality of factors, such as the type of second component, the position of the component, and the environment in which it is arranged. For spacers and spacer springs which normally comprise nickel based material, the coating preferably has a thickness in the range of 0.01-50 µm.

The electrical resistance of the layer should be in the range of 1·10³- 1·10¹⁰ Ω·cm², preferably 1·10⁶- 1·10¹⁰ Ω·cm² to obtain a well insulating effect.

There is a further object of the invention to propose a method for preventing shadow-corrosion on a first component which comprises a zirconium-based alloy and is provided to be arranged in a field with an elevated radioactive radiation on a short distance from a second component, the second component being such that it can form a counter-electrode in relation to the first component, and the first and second component being subjected to the radiation of the field. The second component is made of a nickel based material. Preferably, it is arranged in a nuclear power plant and can be any one of a spacer and a spacer spring.

This object is obtained by means of a method according to claim 5.

The method has, as is the case with the device discussed above, been developed in the light of the new insight about γ-radiation giving rise to occasional conducting channels between the first and second components. Partly due to the surrounding environment, the components will thereby define two electrodes between which charges are interchanged. Normally, the second component will thereby form an electrolytic counter-electrode in relation to the first component when the components are at a short distance from each other, normally less than or equal to 10 mm. The shadow-corrosion of the first component can be substantially reduced by the second component being insulated electrically from the first component, as proposed by the invention. Because the shadow-corrosion only is a problem when said first and second components are arranged at a very short distance from each other, below approximately 10 mm, the second component should be electrically insulated from the first component, preferably in the region where the components are at a distance from each other which is below said shortest distance. Hereby, it should be realised that said shortest distance may vary depending on different external parameters, such as the type of medium in which the components are arranged.

According to the invention, the second component is insulated from the first component by means of an electrically insulating coating which is deposited onto the second component. Thereby, it becomes possible to very precisely control which region of the second component should be insulated by means of said coating. Also a plurality of other properties of the coating, such as the thickness and the electrical resistance, may easily be controlled during the very depositing process. It is also an advantage that any one of the large number of the advanced deposition techniques which are accessible today can be used in order to accomplish such an insulation.

According to a preferred embodiment of the method, the deposition is done by means of at least one of the methods PVD, CVD, heat treatment in gases or gas mixtures, deposition where a fine powder provided in a gel is deposited onto the component and is permitted to sinter as a coating on the surface of the component under the affection of heat, deposition by means of flame-spraying, and spray deposition. All these techniques have been extensively practised and have the advantage of permitting a very precise control of the coating thickness and which material or materials that are to be included in the coating. They also make it possible to arrange a plurality of different layers which are of different compositions or have different material structures and which together define said coating.

A particularly advantageous technique is the one by which a fine powder, preferably a ceramic powder, which is mixed together with a liquid and inorganic or organic compounds to a so-called solgel, is deposited onto the component in question and then is permitted to sinter to a coating on the surface of the component under the affection of heat.

Further features and advantages of the present invention will be defined in the following description of different embodiments of the invention.

### DETAILED DESCRIPTION OF EMBODIMENTS

In a nuclear power plant, which preferably is a boiling-water reactor (BWR) but also could be a pressure-water reactor (PWR) or other commercial or non-commercial fission or fusion reactors, or any other environment where there are substantial radiation fields of neutrons, γ-radiation or β-radiation, a first component and a second component are arranged at a short distance from each other, less than approximatively 10 mm, and these components are arranged in contact with an electrically conducting medium. Normally, this medium is water.

The first component comprises a zirconium-based alloy and may be any one of the components in a nuclear power plant that are comprised by such a zirconium-based alloy, e.g. a spacer frame of a spacer in a light-water reactor.

The second component is made of a nickel based alloy with the capability of acting as an electrolytic counter-electrode in relation to the first component, with or without any externally applied electrical field, and which is also located in a radiation field.

The second component may be a spacer made of a nickel base material for BWR and PWR or spacer springs made of nickel base material for BWR and PWR.

The second component is provided with a coating which comprises zirconium dioxide.

The coating has a thickness of 0.01-1000 µm, preferably 0.01-50 µm for spacers and spacer springs. Its electrical resistance should be 1·10³- 1·10¹⁰ Ω·cm², preferably 1·10⁶ - 1·10¹⁰ Ω·cm².

Of course, a plurality of alternative embodiments will be obvious for a man skilled in the art without thereby leaving the scope of the invention, such as defined in the appended claims.

## Claims

1. A device comprising a first component which comprises a zirconium-based alloy and a second component made of a nickel based material, wherein the second component is of such a type that it can form a counter-electrode in relation to the first component, wherein the first and second components are arranged at short distance from each other with an electrically conducting medium between them and being subjected to radioactive radiation through a radiation field, **characterised in that** the second component is a spacer or spacer spring for a nuclear boiling-water reactor or a nuclear pressure-water reactor, wherein the first and second components are located less than or equal to 10 mm from each other, wherein the device comprises an electrically insulating coating comprising zirconium dioxide, deposited on the second component so as to electrically insulate at least a part of the second component from the first component in order to avoid shadow-corrosion on the first component.

2. A device according to claim 1, **characterised in that** the coating has a thickness in the range of 0.01-1000 µm.

3. A device according to any one of the preceding claims, **characterised in that** the coating has a thickness in the range of 0.01-50 µm.

4. A device according to any one of preceding claims, **characterised in that** the coating has an electrical resistance in the range of 1·10³ - 1·10¹⁰ Ω·cm², preferably 1·10⁶ - 1.10¹⁰ Ω·cm².

5. A method for preventing shadow-corrosion on a first component, said first component comprising a zirconium-based alloy and being arranged to be positioned in a field of radioactive radiation at a short distance from a second component, said second component being made of a nickel based material and being of such a type that it can form a counter-electrode in relation to the first component, and the first and second components being subjected to the radiation of the field, **characterised in that** the second component is a spacer or spacer spring for a nuclear boiling-water reactor or a nuclear pressure-water reactor, wherein the first and second components are located less than or equal to 10 mm from each other, wherein at least a part of the second component is electrically insulated from the first component by providing the second component with an electrically insulating coating comprising zirconium dioxide in order to avoid shadow-corrosion on the first component.

6. A method according to claims 5, **characterised in that** the coating is applied by at least one of the methods comprised by PVD, CVD, heat treatment in gases or gas mixtures, the deposition of a mixture of a fine powder in a gel onto the component where it is permitted to sinter as a coating on the surface of the component under the affection of heat, deposition of a coating by means of flame-spraying, and spray deposition.

7. A method according to any one of claims 5-6, **characterised in that** the coating is given a thickness in the range of 0.01-1000 µm.

8. A method according to any one of claims 5-7, **characterised in that** the coating is given a thickness in the range of 0.01-50 µm.

9. A method according to any one of claims 5-8, **characterised in that** the coating has an electrical resistance of 1·10³ - 1·10¹⁰ Ω·cm², preferably 1·10⁶- 1·10¹⁰ Ω·cm².

## Patentansprüche

1. Anordnung, zu der ein erstes Bauteil gehört, welches eine zirkoniumlegierung enthält, und ein zweites Bauteil gehört, welches aus auf Nickel basierendem Material hergestellt ist, wobei das zweite Bauteil von solcher Art ist, daß es eine Gegenelektrode in Bezug auf das erste Bauteil zu bilden vermag, wobei das erste und das zweite Bauteil in einer geringen Entfernung voneinander angeordnet sind, sich zwischen ihnen ein elektrisch leitendes Medium befindet und sie einer radioaktiven Strahlung durch ein Strahlungsfeld ausgesetzt sind, **dadurch gekennzeichnet, daß** das zweite Bauteil ein Abstandshalter oder eine Abstandshalterfeder für einen Siedewasser-Kernreaktor oder einen Druckwasser-Kernreaktor ist, daß das erste und das zweite Bauteil weniger als oder gleich 10 mm voneinander entfernt angeordnet sind und daß zu der Anordnung ein elektrisch isolierender, Zirkoniumdioxid enthaltender Überzug gehört, der auf dem zweiten Bauteil derart aufgebracht ist, daß er mindestens einen Teil des zweiten Bauteils gegenüber dem ersten Bauteil elektrisch isoliert, um eine Schattenkorrosion (shadow corrosion) des ersten Bauteils zu verhindern.

2. Anordnung nach Anspruch 1, **dadurch gekennzeichnet, daß** der Überzug eine Dicke im Bereich von 0,01-1000 µm.

3. Anordnung nach einem der vorhergehenden Ansprüche, **dadurch gekennzeichnet, daß** der Überzug eine Dicke im Bereich von 0,01-50 µm hat.

4. Anordnung nach einem der vorhergehenden Ansprüche, **dadurch gekennzeichnet, daß** der Überzug einen elektrischen Widerstand im Bereich von 1·10³ bis 1·10¹⁰ Ω·cm², vorzugsweise 1·10⁶ bis 1·10¹⁰ Ω·cm², hat.

5. Verfahren zur Verhinderung einer Schattenkorrosion auf einem ersten Bauteil, welches eine Zirkoniumlegierung enthält und so angeordnet ist, daß es in einem Feld aus radioaktiver Strahlung in einer geringen Entfernung von einem zweiten Bauteil positioniert ist, wobei das zweite Bauteil aus einem auf Nickel basierenden Material hergestellt ist und von solcher Art ist, daß es eine Gegenelektrode im Verhältnis zu dem ersten Bauteil zu bilden vermag, und wobei das erste und das zweite Bauteil der Strahlung des Feldes ausgesetzt sind, **dadurch gekennzeichnet, daß** das zweite Bauteil ein Abstandshalter oder eine Abstandshalterfeder für einen Siedewasser-Kernreaktor oder einen Druckwasser-Kernreaktor ist, daß das erste und das zweite Bauteil weniger als oder gleich 10 mm voneinander entfernt angeordnet sind, und daß mindestens ein Teil des zweiten Bauteils gegenüber dem ersten Bauteil dadurch elektrisch isoliert ist, daß das zweite Bauteil mit einem elektrisch isolierenden Überzug versehen ist, der zirkoniumdioxid enthält, um eine Schattenkorrosion des ersten Bauteils zu verhindern.

6. Verfahren nach Anspruch 5, **dadurch gekennzeichnet, daß** der Überzug durch mindestens eines der Verfahren aufgebracht ist, zu denen PVD, CVD, Wärmebehandlung in Gasen oder in Gasgemischen, Aufbringen einer Mischung aus feinem Pulver oder einem Gel auf dem Bauteil, wobei es unter der Einwirkung von Hitze als ein Überzug auf der Oberfläche des Bauteils zum Sintern gebracht wird, Niederschlag eines Überzuges mittels Flammspritzen und Zerstäubungsniederschlag gehören.

7. Verfahren nach einem der Ansprüche 5-6, **dadurch gekennzeichnet, daß** dem Überzug eine Dicke im Bereich von 0,01-1000 µm gegeben wird.

8. Verfahren nach einem der Ansprüche 5-7, **dadurch gekennzeichnet, daß** dem Überzug eine Dicke im Bereich von 0,01-50 µm gegeben wird.

9. verfahren nach einem der Ansprüche 5-8, **dadurch gekennzeichnet, daß** der Überzug einen spezifischen elektrischen Widerstand von 1·10³ bis 1·10¹⁰ Ω·cm², vorzugsweise 1·10⁶ bis 1·10¹⁰ Ω·cm², hat.

## Revendications

1. Dispositif comprenant un premier composant qui comprend un alliage à base de zirconium et un second composant constitué d'un matériau à base de nickel, dans lequel le second composant est d'un tel type qu'il peut former une contre-électrode par rapport au premier composant, dans lequel le premier et le second composants sont disposés à une courte distance l'un de l'autre avec un milieu électriquement conducteur entre eux et étant soumis à un rayonnement radioactif à travers un champ de rayonnement, **caractérisé en ce que** le second composant est une cale d'espacement ou un ressort de cale d'espacement pour un réacteur nucléaire à eau bouillante ou pour un réacteur nucléaire à eau pressurisée, dans lequel le premier et le second composants sont situés à moins de 10 mm ou à 10 mm l'un de l'autre, dans lequel le dispositif comprend un revêtement électriquement isolant comprenant du dioxyde de zirconium, déposé sur le second composant de manière à isoler électriquement au moins une partie du second composant du premier composant afin d'éviter la corrosion par effet d'ombre sur le premier composant.

2. Dispositif selon la revendication 1, **caractérisé en ce que** le revêtement a une épaisseur dans la plage allant de 0,01 - 1000 µm.

3. Dispositif selon l'une quelconque des revendications précédentes, **caractérisé en ce que** le revêtement a une épaisseur dans la plage allant de 0,01 - 50 µm.

4. Dispositif selon l'une quelconque des revendications précédentes, **caractérisé en ce que** le revêtement a une résistance électrique dans la plage allant de 10·10³ - 1·10¹⁰ Ω·cm², de préférence de 1·10⁶ - 1·10¹⁰ Ω·cm².

5. Procédé pour empêcher la corrosion par effet d'ombre sur un premier composant, ledit premier composant comprenant un alliage à base de zirconium et étant placé de manière à être situé dans un champ de rayonnement radioactif à une. courte distance d'un second composant, ledit second composant étant constitué d'un matériau à base de nickel et étant d'un type tel qu'il peut former une contre-électrode par rapport au premier composant, et le premier et le second composants étant soumis au rayonnement du champ, **caractérisé en ce que** le second composant est une cale d'espacement ou un ressort de cale d'espacement pour un réacteur nucléaire à eau bouillante ou pour un réacteur nucléaire à eau pressurisée, dans lequel le premier et le second composants sont situés à moins de 10 mm ou à 10 mm l'un de l'autre, dans lequel au moins une partie du second composant électriquement isolée du premier composant en munissant le second composant d'un revêtement électriquement isolant comprenant du dioxyde de zirconium afin d'éviter la corrosion par effet d'ombre sur le premier composant.

6. Procédé selon la revendication 5, **caractérisé en ce que** le revêtement est appliqué par au moins l'un des procédés constitués du dépôt physique en phase vapeur, du dépôt chimique en phase vapeur, du traitement thermique dans des gaz ou des mélanges gazeux, du dépôt d'un mélange d'une poudre fine dans un gel sur la surface du composant sous l'influence de la chaleur, le dépôt d'un revêtement par projection à la flamme, et du dépôt par pulvérisation.

7. Procédé selon l'une quelconque des revendications 5 - 6, **caractérisé en ce qu'**on donne au revêtement une épaisseur comprise dans la plage allant de 0,01 - 1000 µm.

8. Procédé selon l'une quelconque des revendications 5 à 7, **caractérisé en ce qu'**on donne au revêtement une épaisseur comprise dans la plage allant de 0,01 - 50 µm.

9. Procédé selon l'une quelconque des revendications 5 à 8, **caractérisé en ce que** le revêtement a une résistance électrique de 10·10³ - 1·10¹⁰ Ω·cm², de préférence de 1·10⁶ - 1·10¹⁰ Ω·cm².
